# EUROPEAN PATENT APPLICATION

(11) **EP 3 163 456 A1**
(43) Date of publication of application: **03.05.2017**
(21) Application number: 15812761.3
(22) Date of filing: 02.06.2015
(51) Int. Cl.: G06F 13/00, H04L 12/58

(54) **COMMUNICATION DEVICE AND MAIL SERVER**

(30) Priority: 24.06.2014 JP 2014129409; 24.06.2014 JP 2014129411
(71) Applicant: Kyocera Document Solutions Inc., Osaka-shi, Osaka 540-8585 (JP)
(72) Inventor: SAKAGUCHI Shoichi, Osaka-shi Osaka 540-8585 (JP); TAKEDA Hideki, Osaka-shi Osaka 540-8585 (JP); TANAKA Yoshihisa, Osaka-shi Osaka 540-8585 (JP); HIROBE Yumi, Osaka-shi Osaka 540-8585 (JP)
(74) Representative: BRP Renaud & Partner mbB Rechtsanwälte Patentanwälte Steuerberater
(86) International application number: PCT/JP2015/065919
(87) International publication number: WO 2015/198805

(57) **Abstract**

A communication device (1) includes: an acceptance section (52) configured to accept a plurality of destination addresses including at least one BCC address and accept, for each destination addresses, a setting of whether to be notified of the BCC address; a mail data generating section (53) configured to generate a set of mail data containing information indicating the BCC address for the destination address for which the acceptance section (52) has accepted the setting that the destination address is to be notified of the BCC address and a set of mail data containing no information indicating the BCC address for the destination address for which the acceptance section (52) has not accepted the setting that the destination address is to be notified of the BCC address; and a transmission section (54) configured to send the sets of mail data generated by the mail data generating section to a mail server.

## Description

### Technical Field

The present invention relates to communication devices configured to send mail data to mail servers, communication control programs, and mail servers and particularly relates to a technique for sending mail data in which a plurality of destination addresses containing a BCC (blind carbon copy) address or addresses are designated as destinations.

### Background Art

In communication devices, such a mail client capable of generating mail data to be sent to a mail server, a mail originator can enter a plurality of destination addresses (mail addresses). The destination addresses include a plurality of types of addresses, such as a TO address, a CC (carbon copy) address, and a BCC address. For example, the mail originator enters, as a CC address and a BCC address, mail addresses of persons whom he/she wants to confirm the contents of a mail except a person of a TO address. In this case, the mail client generates mail data in which header information contains mail addresses designated as the TO address and the CC address. Since the header information contains a mail address designated as the CC address, mail recipients other than the CC address can know the mail address designated as the CC address. On the other hand, since the header information does not contain a mail address designated as the BCC address, mail recipients other than the BCC address cannot know the mail address designated as the BCC address. In this manner, by entering a mail address as a BCC address, the mail originator can get a person of the BCC address to confirm the contents of a mail without the other mail recipients knowing the mail address.

### Citation List

### Patent Literature

Patent Literature 1: JP-A-2001-325187

### Summary of Invention

### Technical Problem

However, even if a mail address is one entered as a BCC address, the mail originator, in some cases, wants to notify some of the recipients of the fact that a mail has been sent to the mail address. For example, there are cases where the mail originator wants to notify users belonging to the same organization as a user having a mail address entered as a BCC address of the fact that the mail has been sent to the mail address but does not want to notify users belonging to the other organizations of the fact.

The present invention has been made in view of the foregoing circumstances and, therefore, its object is to make it possible to notify only a desired recipient or recipients of the fact that a mail has been sent to a mail address designated as a BCC address.

### Solution to Problem

A communication device according to one aspect of the present invention is a communication device including: an acceptance section configured to accept a plurality of destination addresses including at least one BCC address and accept, for each of the destination addresses, a setting of whether or not the destination address is to be notified of the BCC address; a mail data generating section configured to generate a set of mail data containing information indicating the BCC address for the destination address for which the acceptance section has accepted the setting that the destination address is to be notified of the BCC address and generate a set of mail data containing no information indicating the BCC address for the destination address for which the acceptance section has not accepted the setting that the destination address is to be notified of the BCC address; and a transmission section configured to send the sets of mail data generated by the mail data generating section.

A mail server according to another aspect of the present invention is a mail server including: an outgoing mail creating section configured to, according to a command contained in a set of mail data sent from a communication device, create an outgoing mail having as a destination an address for which a setting that the address is to be notified of a BCC address has been accepted by a receiving section of the communication device, the outgoing mail containing information indicating the BCC address, and create an outgoing mail having as a destination an address for which a setting that the address is to be notified of the BCC address has not been accepted by the acceptance section, the outgoing mail containing no information indicating the BCC address; and a transmission section configured to send the outgoing mails created by the outgoing mail creating section.

### Advantageous Effects of Invention

In accordance with the present invention, when a plurality of destination addresses including a BCC address are accepted, it is possible to notify only a desired recipient or recipients of the fact that a mail has been sent to the BCC address.

### Brief Description of Drawings

[Fig. 1] Fig. 1 is a conceptual diagram of a mail sending/receiving system according to Embodiment 1 of the present invention.
[Fig. 2] Fig. 2 is a block diagram showing the configuration of a mail client according to Embodiment 1 of the present invention.
[Fig. 3] Fig. 3 is a view showing an example of a mail data generation screen displayed on a display of the mail client according to Embodiment 1 of the present invention.
[Fig. 4] Fig. 4 is a view showing an example of a set of mail data generated by a mail data generating section of the mail client according to Embodiment 1 of the present invention.
[Fig. 5] Fig. 5 is a view showing an example of a mail data display screen displayed on the display of the mail client according to Embodiment 1 of the present invention.
[Fig. 6] Fig. 6 is a view showing an example of a setting screen displayed on the display of the mail client according to Embodiment 1 of the present invention.
[Fig. 7] Fig. 7 is a view showing another example of a set of mail data generated by the mail data generating section of the mail client according to Embodiment 1 of the present invention.
[Fig. 8] Fig. 8 is a view showing still another example of a set of mail data generated by the mail data generating section of the mail client according to Embodiment 1 of the present invention.
[Fig. 9] Fig. 9 is a view showing still another example of a set of mail data generated by the mail data generating section of the mail client according to Embodiment 1 of the present invention.
[Fig. 10] Fig. 10A is a view showing an example of the contents of the mail data display screen displayed on the display of the mail client according to Embodiment 1 of the present invention when receiving the set of mail data shown in Fig. 7 and Fig. 10B is an example of the contents of the mail data display screen displayed on the display of the mail client according to Embodiment 1 of the present invention when receiving the set of mail data shown in Fig. 8.
[Fig. 11] Fig. 11 is a flowchart showing a flow of mail data transmission processing performed by the mail client and a mail server according to Embodiment 1 of the present invention.
[Fig. 12] Fig. 12 is a view showing an example of a set of mail data generated by a mail data generating section of a mail client according to a modification of Embodiment 1 of the present invention.
[Fig. 13] Fig. 13 is a flowchart showing a flow of mail data transmission processing performed by the mail client and a mail server according to the modification of Embodiment 1 of the present invention.
[Fig. 14] Fig. 14 is a view showing an example of a setting screen displayed on a display of a mail client according to Embodiment 2 of the present invention.
[Fig. 15] Fig. 15 is a view showing an example of a set of mail data generated by a mail data generating section of a mail client according to a modification of Embodiment 2 of the present invention.

### Description of Embodiments

Hereinafter, a description will be given of a communication device, a communication control program, and a mail server, all according to one embodiment of the present invention, with reference to the drawings.

### <Embodiment 1>

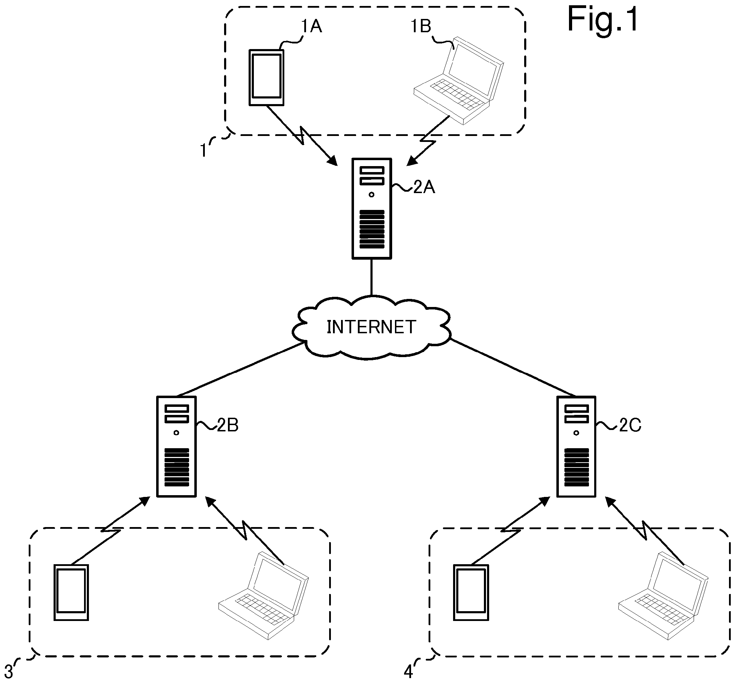

Fig. 1 is a conceptual diagram of a mail sending/receiving system according to Embodiment 1 of the present invention. The mail sending/receiving system can be constituted by a mail client (communication device) and a mail server which are connected via the Internet to each other.

A mail client 1A and a mail client 1B (hereinafter often referred to collectively as a "mail client 1") are a mobile terminal, such as a smartphone, and a PC (personal computer). The mail client 1 can establish data communication with a mail server 2A when attached to the Internet via a communication network of a cellular phone company, a public wireless LAN (local area network) or the like. The mail client 1 generates mail data according to a user's operation of a mail originator and sends the generated mail data to the mail server 2A using SMTP (Simple Mail Transfer Protocol).

The mail server 2A delivers mail data to other mail servers 2B or 2C based on the mail data sent from the mail client 1.

A mail client 3 and a mail client 4 communicate with the mail server 2B or the mail server 2C and download the mail data if the mail data is delivered to the associated mail server.

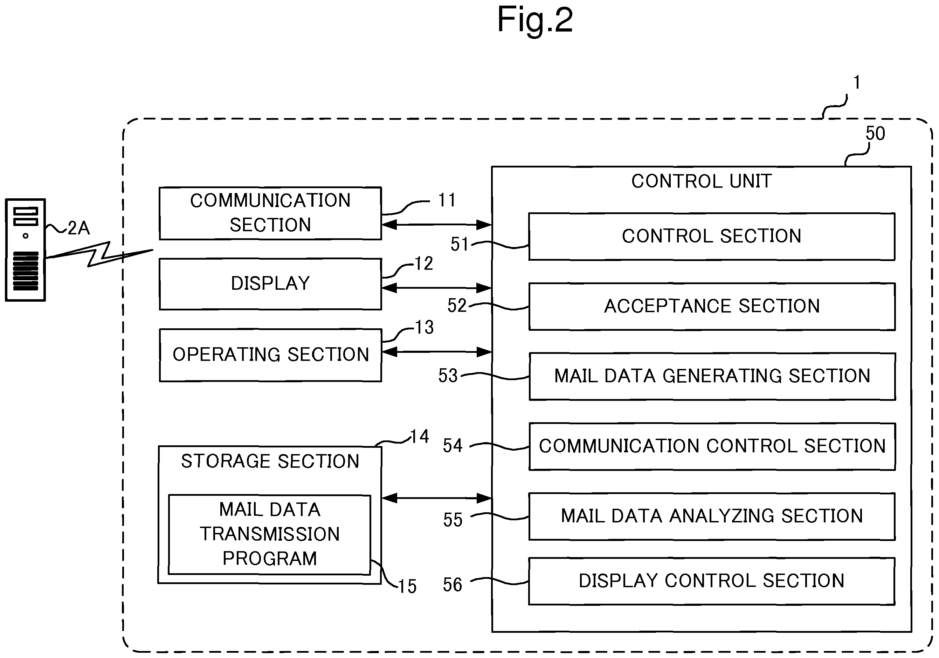

Fig. 2 is a block diagram showing the configuration of the mail client 1. The mail client 1 includes a communication section 11, a display 12, an operating section 13, and a storage section 14.

The communication section 11 includes a communication module, such as a LAN chip, and is configured to send and receive data to and from the mail server 2A under the control of a communication control section 54 to be described hereinafter.

The display 12 is formed by including a liquid crystal display (LCD) or an organic EL (OLED: organic light-emitting diode) display. The display 12 is configured to display a mail data generation screen and other screens under the control of a display control section 56 to be described hereinafter.

The operating section 13 is formed by including an input device, such as a keyboard, and a pointing device, such as a mouse. The operating section 13 is configured to accept from a mail originator user's operations associated with the screen displayed on the display 12.The storage section 14 is a large storage device, such as an HDD (hard disk drive).

The mail client 1 further includes a control unit 50. The control unit 50 is composed of a CPU (central processing unit), a RAM (random access memory), a ROM (read only memory), and so on. When a mail data transmission program 15 (the communication control program) stored in the above ROM or the storage section 14 is executed by the above CPU, the control unit 50 functions as a control section 51, an acceptance section 52, a mail data generating section 53, a communication control section 54, a mail data analyzing section 55, and a display control section 56. Alternatively, each of the control section 51, the acceptance section 52, the mail data generating section 53, the communication control section 54, the mail data analyzing section 55, and the display control section 56 of the control unit 50 may not be implemented by the operation of the control unit 50 in accordance with the above mail data transmission program 15 but may be constituted by a hardware circuit.

The control section 51 governs the overall operation control of the mail client 1. The control section 51 is connected to the communication section 11, the display 12, the operating section 13, the storage section 14, and so on and performs the operation control of the above components connected thereto and signal or data transfer to and from the components.

The acceptance section 52 has the function of accepting, based on a user's operation of a mail originator using the operating section 13, various commands, such as a command to enter a mail text, a command to enter a mail address as a destination address, and a command to select the type of destination address. For example, when the acceptance section 52 accepts a plurality of destination addresses including at least a BCC address, it accepts, for each BCC address, a setting of whether or not the BCC address is to be notified of the other BCC address(es).

The mail data generating section 53 has the function of generating mail data based on the command accepted by the acceptance section 52. The detailed contents of the mail data generated by the mail data generating section 53 will be described hereinafter.

The communication control section 54 has the function of controlling the data communication operation of the communication section 11. Specifically, the communication control section 54 allows the communication section 11 to send the mail data generated by the mail data generating section 53 to the mail server 2A. Furthermore, the communication control section 54 communicates, with the timing with which the acceptance section 52 accepts a command to acknowledge receipt of a mail or the timing of passage of a predetermined period of time, with the mail server 2A via the communication section 11 to confirm whether or not the mail data has been delivered to the mail server 2A. If the mail data has been delivered, the communication control section 54 allows the communication section 11 to download (receive) the mail data from the mail server 2A.

The mail data analyzing section 55 has the function of analyzing header information and so on contained in the mail data that the communication control section 54 has received via the communication section 11.

The display control section 56 has the function of controlling the display operation of the display 12.

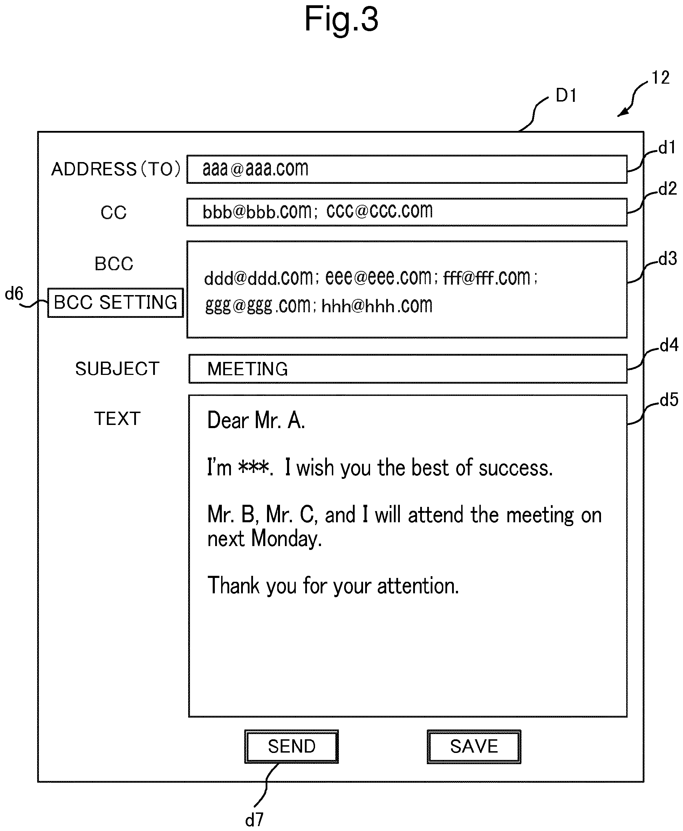

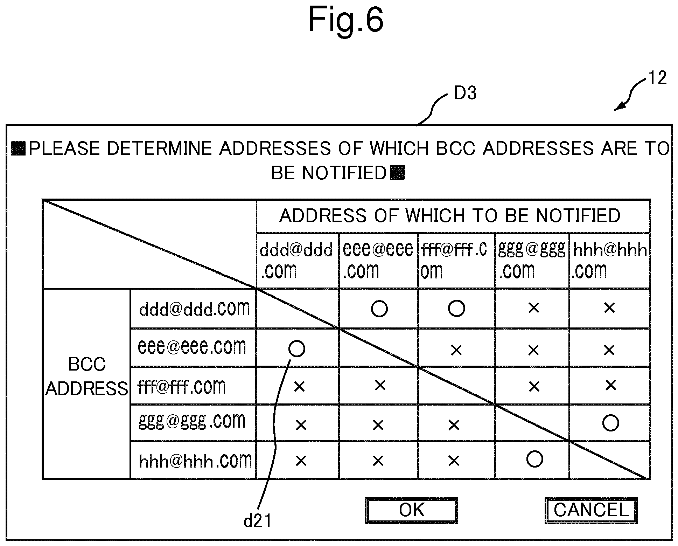

Next, a description will be given of specific matters of the mail data generation processing. Fig. 3 is a view showing an example of a mail data generation screen D1 displayed on the display 12. The mail data generation screen D1 is provided with a TO address entry field d1 for accepting a command to enter a TO address, a CC address entry field d2 for accepting a command to enter a CC address, a BCC address entry field d3 for accepting a command to enter a BCC address, a subject entry field d4 for accepting a command to enter a subject, and a mail text entry field d5 for accepting a command to enter a mail text. Furthermore, the mail data generation screen D1 is also provided with a BCC setting button d6 and a send button d7. When the acceptance section 52 accepts the selection of the BCC setting button d6, the display control section 56 allows the display 12 to display a setting screen D3 (see Fig. 6) for accepting, for each BCC address, a setting of whether or not the BCC address is to be notified of the other BCC address(es). On the other hand, when the acceptance section 52 accepts the selection of the send button d7, the mail data generating section 53 generates mail data according to the respective items of information entered in the above entry fields. Thereafter, the communication control section 54 allows the communication section 11 to send the mail data generated by the mail data generating section 53 to the mail server 2A.

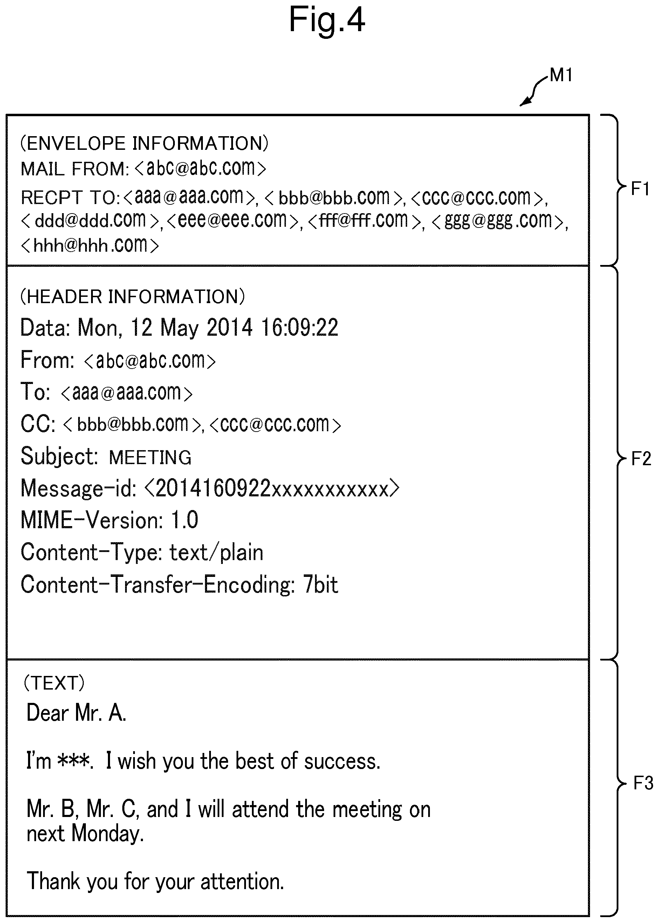

Fig. 4 is a view showing an example of a set of mail data M1 generated by the mail data generating section 53. This figure shows the contents of the set of mail data M1 generated when the acceptance section 52 accepts neither the selection of the BCC setting button d6 nor the setting of whether or not each BCC address is to be notified of the other BCC address(es).

The set of mail data M1 is composed of envelope information F1, header information F2, and mail text information F3. The envelope information F1 contains MAIL FROM information indicating an address of the source of the set of mail data and RECPT TO information indicating respective addresses of one or more destinations of the set of mail data. The mail data generating section 53 generates envelope information F1 containing as the MAIL FROM information a mail address of an mail originator and containing as the RECPT TO information all of mail addresses entered in the TO address entry field d1, the CC address entry field d2, and the BCC address entry field d3. The generated envelope information F1 is used when the mail server 2A identifies mail servers for delivery.

The header information F2 contains Data information indicating the date and time of transmission of the set of mail data, From information indicating the address of the source of the set of mail data, To information indicating a TO address, CC information indicating a CC address or addresses, Subject information indicating a subject, Message-id information as a unique identifier for each set of mail data, and so on. The mail data generating section 53 generates header information F2 containing as the To information the address entered in the TO address entry field d1, containing as the CC information the address(es) entered in the CC address entry field d2, and containing as the Subject information the content entered in the subject entry field d4. Furthermore, the mail data generating section 53 excludes an address or addresses entered in the BCC information entry field d3 from the header information F2.

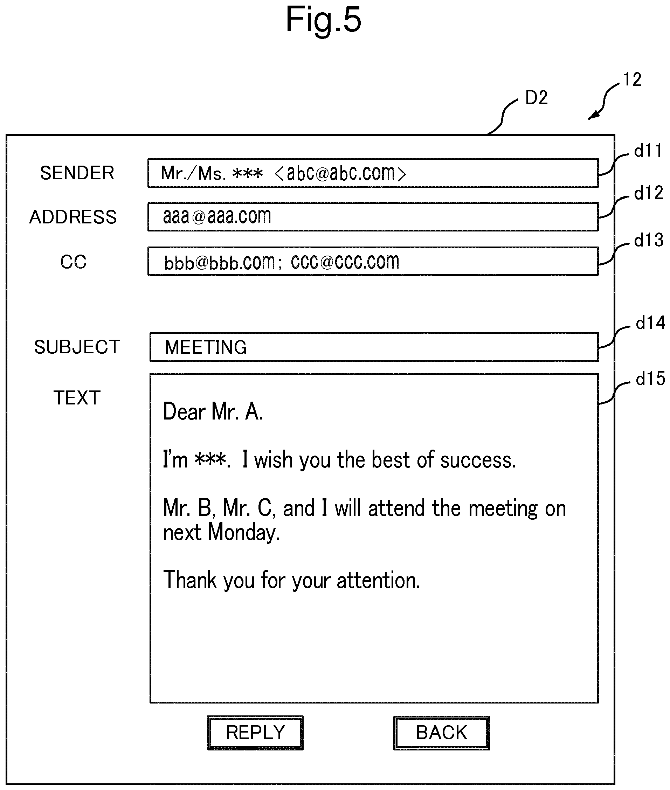

The generated header information F2 is analyzed by the mail data analyzing section 55 of the mail client 1, the mail client 3, the mail client 4 or the like having received the set of mail data M1. The display control section 56 determines, based on the analysis result of the mail data analyzing section 55, the content of a display screen to be displayed on the display 12. Fig. 5 is a view showing an example of a mail data display screen D2 displayed on the display 12. The mail data display screen D2 is provided with a sender display field d11, a TO address display field d12, a CC address display field d13, a subject display field d14, and a mail text display field d15. The display control section 56 allows the display 12 to display the address indicated by the From information of the header information F2 in the sender display field d11, display the address indicated by the To information of the header information F2 in the TO address display field d12, display the address(es) indicated by the CC information of the header information F2 in the CC address display field d13, display the content indicated by the Subject information of the header information F2 in the subject display field d14, and display the content indicated by the mail text information F3 in the mail text display field d15.

As seen from the above, when the acceptance section 52 accepts neither the selection of the BCC setting button d6 nor the setting of whether or not each BCC address is to be notified of the other BCC address(es), the header information F2 contains no BCC address, so that all the recipients cannot know the BCC address(es).

Fig. 6 is a view showing an example of a setting screen D3 displayed on the display 12. When the acceptance section 52 accepts the selection of the BCC setting button d6, the display control section 56 allows the display 12 to display a setting screen D3. In the example shown in this figure, setting is made to notify the destination address "ddd@ddd.com" of BCC destination addresses "eee@eee.com" and "fff@fff.com". Furthermore, setting is made to notify the destination address "eee@eee.com" of the BCC destination address "ddd@ddd.com". For example, when the acceptance section 52 accepts the selection of a cell d21, the display control section 56 allows the display 12 to change the display within the cell d21 from "circle" to "cross". Thus, the setting is changed to keep the destination address "eee@eee.com" from being notified of the BCC destination address "ddd@ddd.com".

Although the above description has been given of the case where the acceptance section 52 accepts, for each BCC address, the setting of whether or not the BCC address is to be notified of the other BCC address(es), the present invention is not necessarily limited to this case. The acceptance section 52 may accept, not only for each BCC address but for every destination address including the TO address, the CC address(es), and the BCC address(es), the setting of whether or not the destination address is to be notified of the BCC address(es).

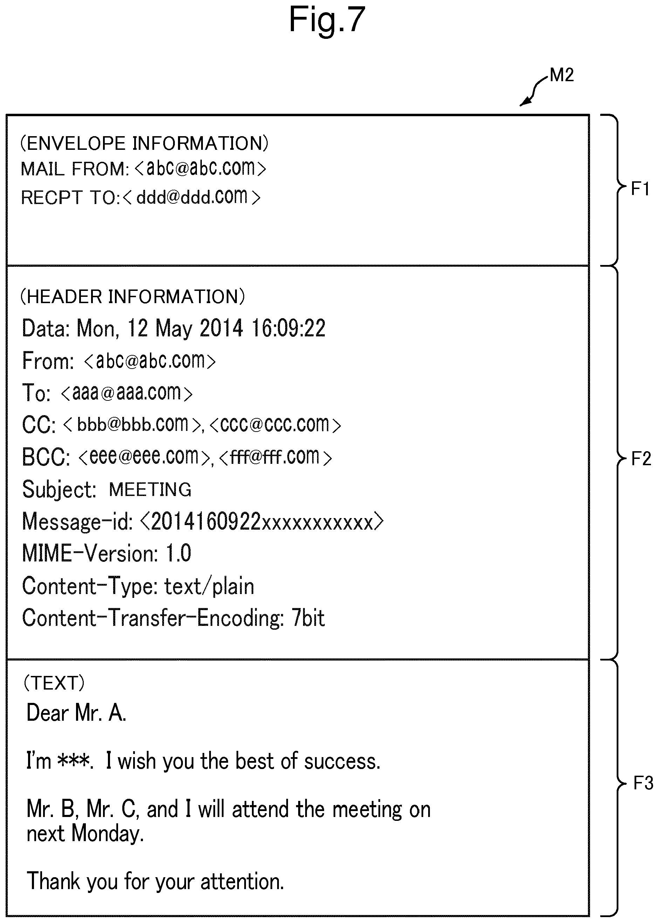

Figs. 7 to 9 are views showing examples of a set of mail data generated by the mail data generating section 53.

When the acceptance section 52 accepts, for each BCC address, the setting of whether or not the BCC address is to be notified of the other BCC address(es), the mail data generating section 53 needs to generate a plurality of sets of mail data having different header information F2. Fig. 7 shows the contents of a set of mail data M2 in which a destination is the address "ddd@ddd.com" for which the setting that the address is to be notified of the other BCC addresses has been accepted. As shown in Fig. 7, the mail data generating section 53 generates a set of mail data M2 containing: envelope information F1 in which RECPT TO information is formed only of the address "ddd@ddd.com"; and header information F2 in which BCC information is formed of the addresses "eee@eee.com" and "fff@fff.com" which have been set, on the setting screen D3, as BCC addresses of which the address "ddd@ddd.com" is to be notified.

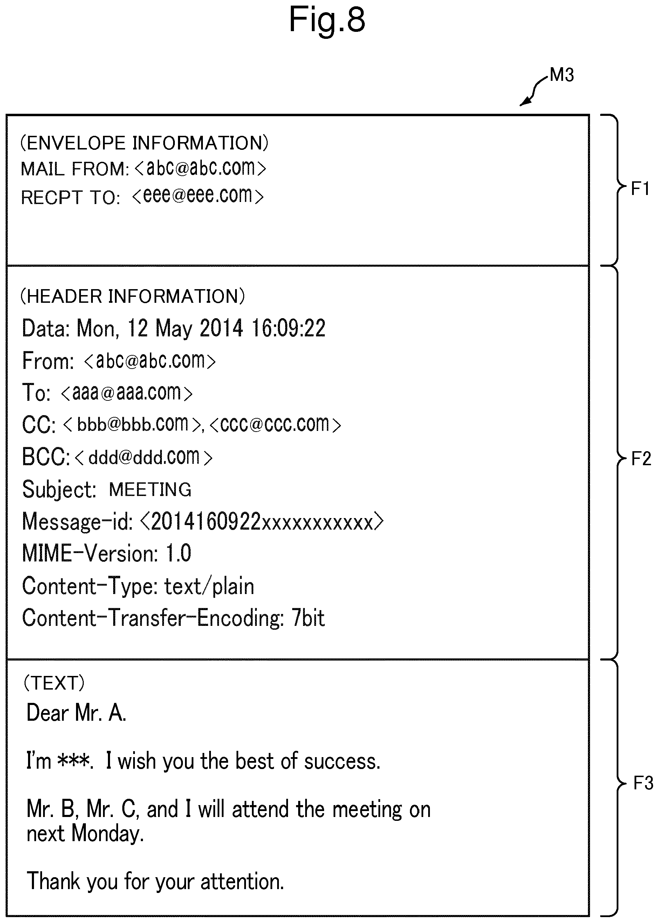

Fig. 8 shows the contents of a set of mail data M3 in which a destination is the address "eee@eee.com" for which the setting that the address is to be notified of the other BCC address(es) has been accepted. As shown in Fig. 8, the mail data generating section 53 generates a set of mail data M3 containing: envelope information F1 in which RECPT TO information is formed only of the address "eee@eee.com"; and header information F2 in which BCC information is formed of the address "ddd@ddd.com" which has been set, on the setting screen D3, as a BCC address of which the address "eee@eee.com" is to be notified.

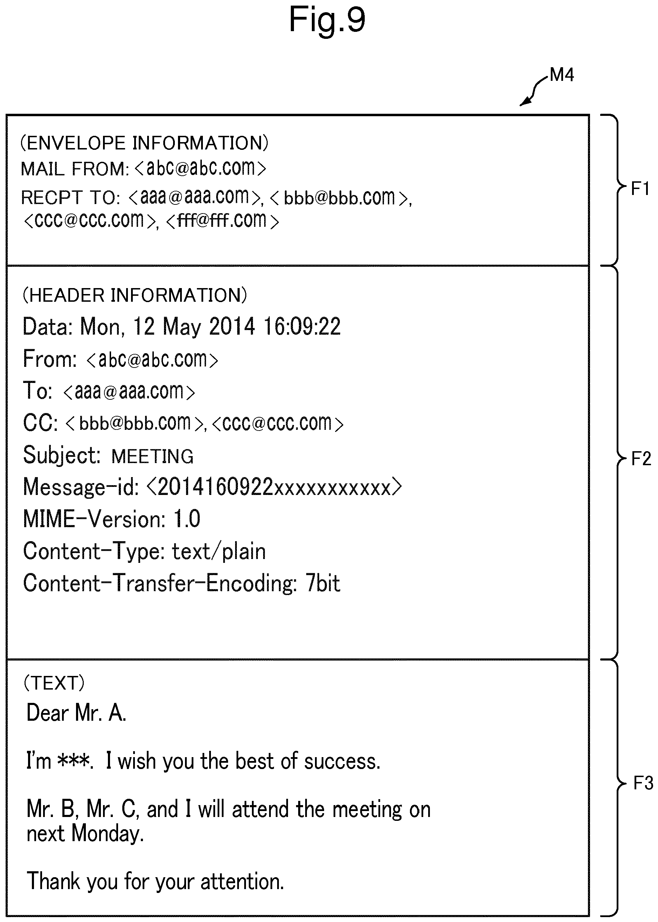

Fig. 9 shows the contents of a set of mail data M4 in which destinations are the addresses "fff@fff.com" and so on for each of which the setting that the address is to be notified of the other BCC addresses has not been accepted. As shown in Fig. 9, the mail data generating section 53 generates a set of mail data M4 containing: envelope information F1 in which RECPT TO information is formed of the addresses "aaa@aaa.com", "bbb@bbb.com", "ccc@ccc.com", and "fff@fff.com"; and header information F2 containing no BCC information.

Setting may be made so that in sending a set of mail data on a mail server, such as the mail server 2A, the mail server 2B or the mail server 2C, the mail server deletes the BCC information contained in the header information F2. The reason for this is that in a general mail sending/receiving system configured not to notify the other recipients of the BCC address(es) the BCC information contained in the header information F2 is unnecessary information. In view of this, when the acceptance section 52 accepts, for each BCC address, the setting of whether or not the BCC address is to be notified of the other BCC address(es), the mail data generating section 53 may incorporate, into the set of mail data, information allowing the mail server to be forbidden from deleting the BCC address(es) indicated by the BCC information contained in the header information F2.

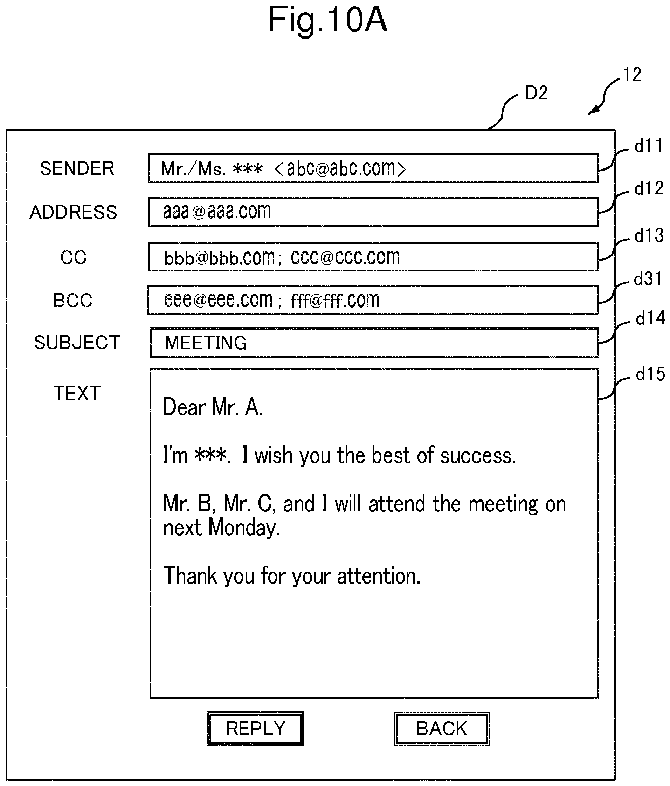

Fig. 10A is a view showing an example of the contents of the mail data display screen D2 displayed on the display 12 of the mail client 1, the mail client 3, the mail client 4 or the like when receiving the set of mail data M2 shown in Fig. 7. In the example shown in this figure, the display control section 56 allows the addresses "eee@eee.com" and "fff@fff.com" indicated by the BCC information contained in the header information F2 of the received set of mail data M2 to be displayed in a BCC address display field d 31 of the mail data display screen D2.

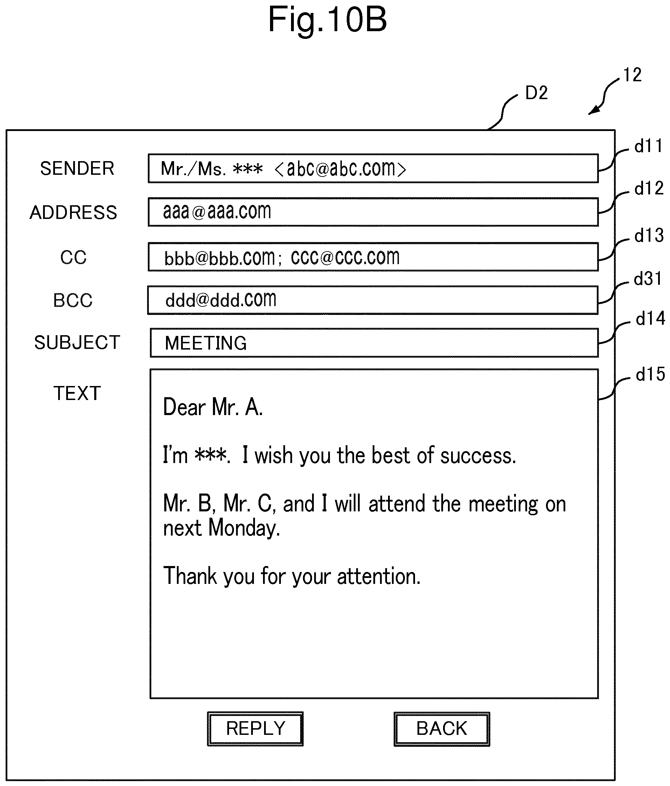

Fig. 10B is a view showing an example of the contents of the mail data display screen D2 displayed on the display 12 of the mail client 1, the mail client 3, the mail client 4 or the like when receiving the set of mail data M3 shown in Fig. 8. In the example shown in this figure, the display control section 56 allows the address "ddd@ddd.com" indicated by the BCC information contained in the header information F2 of the received set of mail data M3 to be displayed in the BCC address display field d 31 of the mail data display screen D2.

As described above, the mail client 1 according to Embodiment 1 of the present invention can notify only a specific recipient or recipients of a BCC mail address or addresses. For example, it can be considered that the above settings shown in Fig. 6 are made when there are the following demands from the mail originator:
(1) the mail originator does not want to notify the users having their respective addresses "aaa@aaa.com", "bbb@bbb.com", and "ccc@ccc.com" of the addresses "ddd@ddd.com", "eee@eee.com", "fff@fff.com", "ggg@ggg.com", and "hhh@hhh.com"; and
(2) because the users having their respective addresses "ddd@ddd.com", "eee@eee.com", and "fff@fff.com" belong to Organization A and the users having their respective addresses "ggg@ggg.com" and "hhh@hhh.com" belong to Organization B different from Organization A, the mail originator wants the contents of a mail to be shared within each of Organizations A and B.

General mail clients cannot notify only a specific recipient or recipients of a BCC mail address or addresses and, therefore, cannot satisfy the above demands. If the addresses "ddd@ddd.com", "eee@eee.com", "fff@fff.com", "ggg@ggg.com", and "hhh@hhh.com" are set as BCC addresses, a mail can be sent to a plurality of users belonging to Organizations A and B without the users of the addresses "aaa@aaa.com", "bbb@bbb.com", and "ccc@ccc.com" knowing the BCC addresses. However, each user having received the mail cannot know that the mail has also been sent to the other users within the same organization, so that the user may forward the mail to the other users in order to share the contents of the mail with them. In this case, the mail already received by the other users is forwarded, which is troublesome.

Unlike the above, in the mail client 1 according to Embodiment 1 of the present invention, the acceptance section 52 accepts a plurality of destination addresses including at least one BCC address and accepts, for each destination address, a setting of whether or not the destination address is to be notified of the BCC address(es). Furthermore, the mail data generating section 53 generates, for each destination address for which the acceptance section 52 has accepted the setting that the destination address is to be notified of the BCC address(es), a set of mail data containing a command to allow the mail server 2A to send an outgoing mail containing information indicating the BCC address(es) to the destination address and generates, for each destination address for which the acceptance section 52 has not accepted the setting that the destination address is to be notified of the BCC address(es), a set of mail data containing a command to allow the mail server 2A to send an outgoing mail containing no information indicating the BCC address(es) to the destination address.

Thus, for example, by making the settings shown in Fig. 6, the contents of a mail can be shared within each of Organizations A and B without the users of the addresses "aaa@aaa.com", "bbb@bbb.com", and "ccc@ccc.com" knowing the BCC addresses. Furthermore, since users within each of Organizations A and B can know that the mail has been sent to the other user(s) within the same organization, they can know that the contents of the mail are shared within the organization.

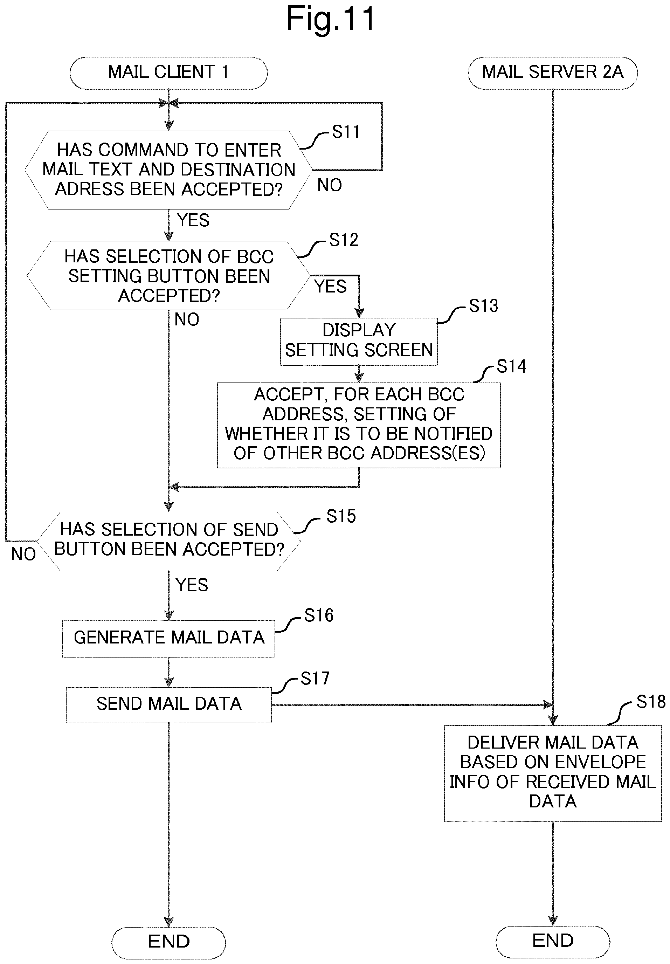

Next, a description will be given of an operation flow of the mail client 1 and the mail server 2A having the above configurations. Fig. 11 is a flowchart showing a flow of mail data transmission processing performed by the mail client 1 and the mail server 2A.

The acceptance section 52 of the mail client 1 determines whether or not it has accepted a command to enter a mail text and any destination address (step S11).

If the command to enter a mail text and any destination address has been accepted (YES in step S11), the acceptance section 52 determines whether or not it has accepted the selection of the BCC setting button d6 (step S12).

If the selection of the BCC setting button d6 has been accepted (YES in step S12), the display control section 56 allows the display 12 to display the setting screen D3 for accepting, for each BCC address, a setting of whether or not the BCC address is to be notified of the other BCC address(es) (step S13).

After the processing of step S13, the acceptance section 52 accepts, for each BCC address, the setting of whether or not the BCC address is to be notified of the other BCC address(es) (step S14).

If the acceptance section 52 accepts the selection of the send button d7 (YES in step S15), the mail data generating section 53 generates a set or sets of mail data based on the entered contents and settings accepted by the acceptance section in the processing of steps S11 and S14 (step S16).

After the generation of mail data, the communication control section 54 allows the communication section 11 to send the set or sets of mail data generated by the mail data generating section 53 to the mail server 2A (step S17).

The mail server 2A receives the set or sets of mail data sent from the mail client 1 and delivers the set or sets of mail data to the mail server(s) indicated in the envelope information contained in each received set of mail data (step S18).

### <Modification of Embodiment 1>

In Embodiment 1 above, the mail data generating section 53 of the mail client 1 generates, for each destination address for which the setting that the destination address is to be notified of a BCC address or addresses has been accepted, a set of mail data containing envelope information designating the destination address as a destination and header information containing the BCC address(es) and generates, for each destination address for which the setting that the destination address is to be notified of the BCC address(es) has not been accepted, a set of mail data containing envelope information designating the destination address as a destination and header information not containing the BCC address(es). Unlike this, in the modification of Embodiment 1, the mail data generating section 53 of the mail client 1 does not generate a plurality of sets of mail data for individual destination addresses, but generates a single set of mail data and sends it to the mail server 2A. In the mail server 2A, the information contained in the received single set of mail data is analyzed to generate a plurality of sets of mail data for individual destination addresses and the sets of mail data are sent to individual mail servers.

Specifically, the mail data generating section 53 generates a set of mail data containing: (1) envelope information designating all destination addresses accepted by the acceptance section 52 as destinations; (2) information indicating the destination address(es) for each of which the acceptance section 52 has accepted the setting that the destination address is to be notified of a BCC address or addresses; and (3) a command to allow the mail server 2A to create outgoing mails in each of which, among the destination addresses indicated by the envelope information, a destination address for which the setting that the destination address is to be notified of the BCC address(es) has been accepted is designated as a destination and each of which contains header information containing the BCC address(es), allow the mail server 2A to create outgoing mails in each of which, among the destination addresses, a destination address for which the setting that the destination address is to be notified of the BCC address(es) has not been accepted is designated as a destination and each of which contains no header information containing the BCC address(es), and allow the mail server 2A to send the created mails.

Then, according to the command contained in the set of mail data sent from the mail client 1, the mail server 2A creates outgoing mails in each of which an address for which the setting that the address is to be notified of the BCC address(es) has been accepted by the receiving section 52 of the mail client 1 is designated as a destination and each of which contains information indicating the BCC address(es) (in the outgoing mail creating section). Also, the mail server 2A creates outgoing mails in each of which an address for which the setting that the address is to be notified of the BCC address(es) has not been accepted by the acceptance section 52 is designated as a destination and each of which contains no information indicating the BCC address(es) (in the outgoing mail creating section). Thereafter, the mail server 2A sends the created outgoing mails (in the transmission section).

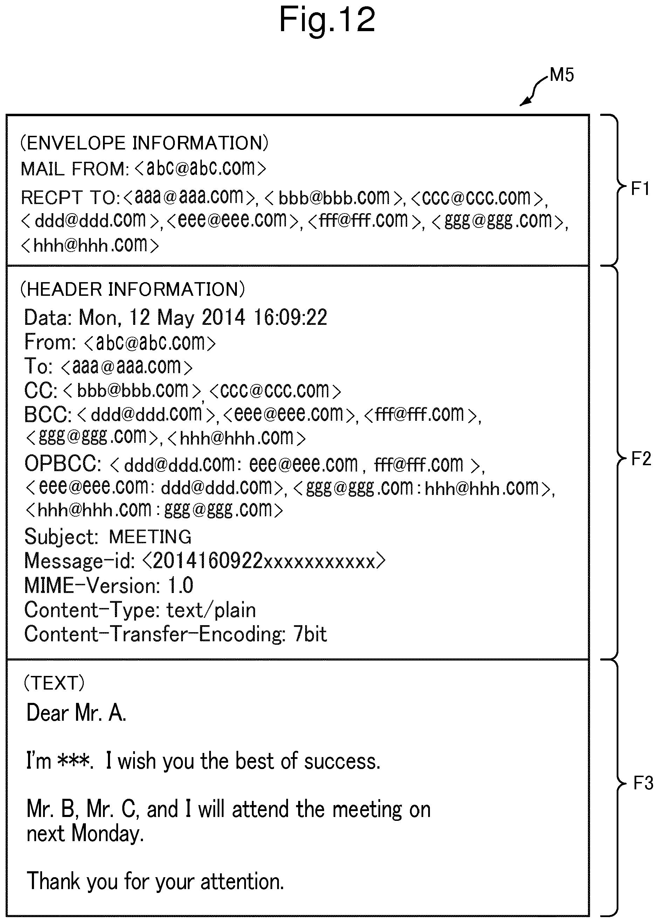

Fig. 12 is a view showing an example of a set of mail data M5 generated by the mail data generating section 53 of the mail client 1 according to the modification of Embodiment 1. This figure shows the contents of the set of mail data M5 generated when the acceptance section 52 accepts the destination addresses and settings shown in Figs. 3 and 6. The mail data generating section 53 generates envelope information F1 containing as RECPT TO information all the destination addresses accepted by the acceptance section 52. Furthermore, the mail data generating section 53 generates header information F2 containing OPBCC information which is information indicating a destination address or addresses for each of which the acceptance section 52 has accepted the setting that the destination address is to be notified of a BCC address or addresses. In the example shown in Fig. 12, for example, "ddd@ddd.com: eee@eee.com, fff@fff.com" indicates that the destination address "ddd@ddd.com" is notified of the BCC destination addresses "eee@eee.com" and "fff@ff.com".

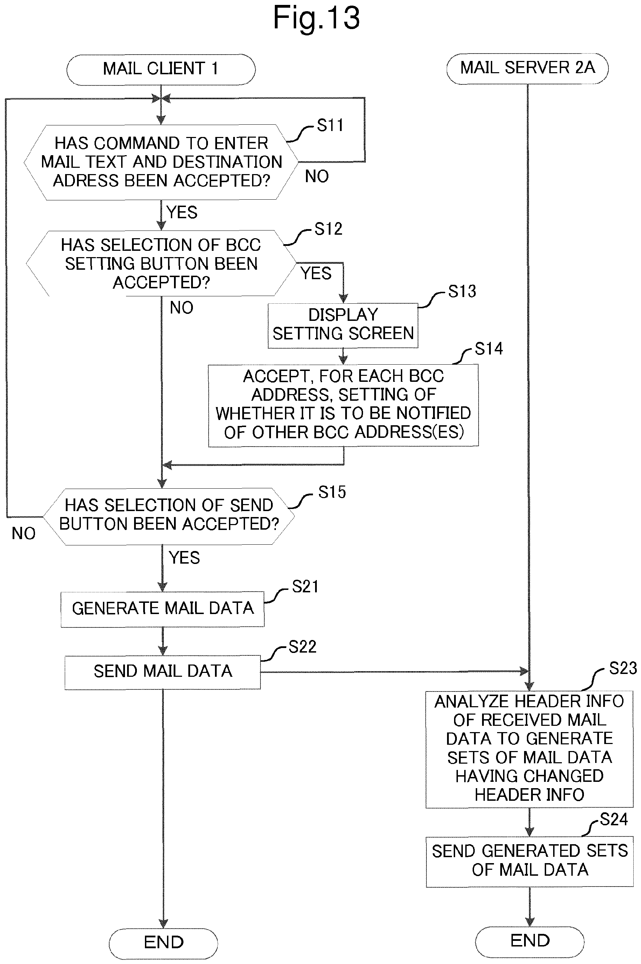

Fig. 13 is a flowchart showing a flow of mail data transmission processing performed by the mail client 1 and the mail server 2A according to the modification of Embodiment 1. The same pieces of processing as those described with reference to the flowchart of Fig. 11 are designated by the same references and further explanation thereof will be omitted.

If the acceptance section 52 accepts the selection of the send button d7 (YES in step S15), the mail data generating section 53 generates a set of mail data based on the entered contents and settings accepted by the acceptance section in the processing of steps S11 and S14 (step S21). After the generation of mail data, the communication control section 54 allows the communication section 11 to send the set of mail data generated by the mail data generating section 53 to the mail server 2A (step S22).

The mail server 2A receives the set of mail data sent from the mail client 1 and analyzes the header information of the received set of mail data to generate sets of mail data each having changed header information (step S23). For example, when receiving the set of mail data M5 shown in Fig. 12, the mail server 2A generates, based on the OPBCC information contained in the header information, the sets of mail data M2, M3, and M4 shown in Figs. 7 to 9.

After the processing of step S23, the mail server 2A delivers the generated sets of data to the mail servers indicated by the envelope information (step S24).

As thus far described, like the mail client 1 according to Embodiment 1 above, the mail client 1 according to the modification of Embodiment 1 can notify only a specific recipient or recipients of a BCC mail address or addresses.

### <Embodiment 2>

In the mail client 1 according to Embodiment 2, when the acceptance section 52 accepts a plurality of destination addresses containing a plurality of BBC addresses, it accepts, for each BCC address, a setting of a group attribute indicating a group to which the BCC address belongs.

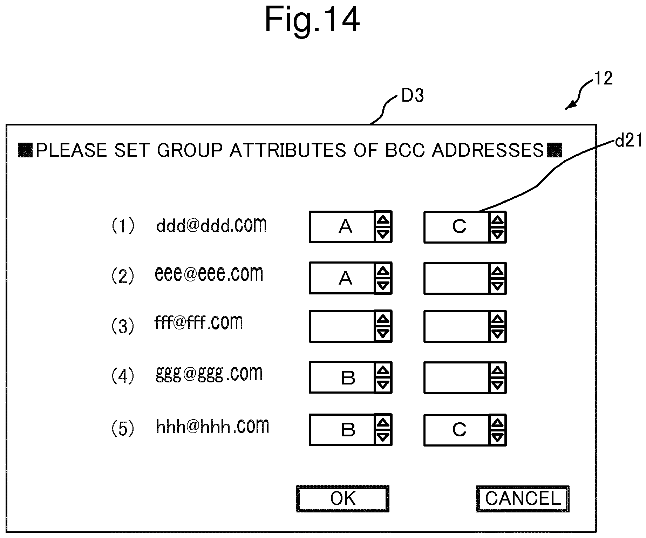

When the acceptance section 52 accepts the selection of the BCC setting button d6 through the mail data generation screen D1 shown in Fig. 3, the display control section 56 allows the display 12 to display a setting screen D3 (see Fig. 14) for accepting, for each BCC address, a setting of a group attribute indicating a group to which the BCC address belongs. In the example shown in this figure, for example, Groups A and C are set for the BCC address "ddd@ddd.com" and Group A is set for the BCC address "eee@eee.com". On the other hand, no group attribute is set for the BCC address "fff@fff.com". For example, when the acceptance section 52 accepts the selection of a cell d21, the display control section 56 allows the display 12 to change the display within the cell d21 from Group C to another group. Thus, the setting of the group attribute for the BCC address "ddd@ddd.com" is changed.

According to the group attribute settings through the setting screen D3 shown in Fig. 14, the mail data generating section 53 generates sets of mail data shown in Figs. 7 to 9.

As shown in Fig. 7, the mail data generating section 53 generates, as the set of mail data M2 for the address "ddd@ddd.com", a set of mail data which contains header information F2 in which BCC information is formed of the addresses "eee@eee.com" and "hhh@hhh.com" set as BCC addresses belonging to the same group attribute as the address "ddd@ddd.com" through the setting screen D3. Furthermore, as shown in Fig. 8, the mail data generating section 53 generates, as the set of mail data M2 for the address "eee@eee.com", a set of mail data which contains header information F2 in which BCC information is formed of the address "ddd@ddd.com" set as a BCC address belonging to the same group attribute as the address "eee@eee.com" through the setting screen D3. Moreover, as shown in Fig. 9, the mail data generating section 53 generates, as the set of mail data M4 for the address "fff@ff.com" for which no group attribute is set, a set of mail data M4 which contains header information F2 containing no BCC information.

As thus far described, in the mail client 1 according to Embodiment 2, the acceptance section 52 accepts a plurality of BBC addresses and accepts, for each BCC address, a setting of a group attribute indicating a group to which the BCC address belongs. Furthermore, the mail data generating section 53 generates, for each BCC address as for which the other BCC address(es) belonging to the same group exist, a set of mail data containing a command to allow the mail server 2A to send an outgoing mail containing information indicating the other BCC address(es) belonging to the same group to the BCC address and generates, for each BCC address as for which no other BCC address belonging to the same group exists, a set of mail data containing a command to allow the mail server 2A to send an outgoing mail containing no information indicating the other BCC address(es) to the BCC address.

Thus, for example, by making the settings shown in Fig. 14, the contents of a mail can be shared within each of Organizations A and B without the users of the addresses "aaa@aaa.com", "bbb@bbb.com", and "ccc@ccc.com" knowing the BCC addresses. Furthermore, since users within Organizations A and B can mutually know that the mail has been sent to the other user(s) set to belong to the same group, they can know that the contents of the mail are shared within the group.

### <Modification of Embodiment 2>

In Embodiment 2 above, the mail data generating section 53 of the mail client 1 generates, for each BCC address for which a group attribute setting has been accepted, a set of mail data containing envelope information designating the BCC address as a destination and header information containing the other BCC address(es) belonging to the same group as the relevant BCC address and generates, for each BCC address for which no group attribute setting has been accepted, a set of mail data containing envelope information designating the BCC address as a destination and header information not containing the BCC address(es). Unlike this, in the modification of Embodiment 2, the mail data generating section 53 of the mail client 1 does not generate a plurality of sets of mail data for individual destination addresses but generates a single set of mail data and sends it to the mail server 2A. In the mail server 2A, the information contained in the received single set of mail data is analyzed to generate a plurality of sets of mail data for individual destination addresses and the sets of mail data are sent to individual mail servers.

Specifically, the mail data generating section 53 generates a set of mail data containing: (1) envelope information designating all destination addresses accepted by the acceptance section 52 as destinations; (2) information that indicates settings of group attributes accepted by the acceptance section 52 and representing groups to which individual BCC addresses belong; and (3) a command to allow the mail server 2A to create outgoing mails in each of which, among the destination addresses indicated by the envelope information, a BCC address as for which the other BCC address(es) belonging to the same group exist is designated as a destination and each of which contains header information containing the other BCC address(es) belonging to the same group, allow the mail server 2A to create outgoing mails in each of which, among the destination addresses, a BCC address as for which no other BCC address belonging to the same group exists is designated as a destination and each of which contains no header information containing the other BCC address(es), and allow the mail server 2A to send the created mails.

Then, according to the command contained in the set of mail data sent from the mail client 1, the mail server 2A creates outgoing mails in each of which a BCC address as for which the other BCC address(es) belonging to the same group exist in the group attribute settings made by the acceptance section 52 of the mail client 1 is designated as a destination and each of which contains information indicating the other BCC address(es) belonging to the same group as the relevant BCC address (in the outgoing mail creating section). Also, the mail server 2A creates outgoing mails in each of which a BCC address as for which no other BCC address belonging to the same group exists in the group attribute settings made by the acceptance section 52 is designated as a destination and each of which contains no information indicating the other BCC address(es) (in the outgoing mail creating section). Thereafter, the mail server 2A sends the created outgoing mails (in the transmission section).

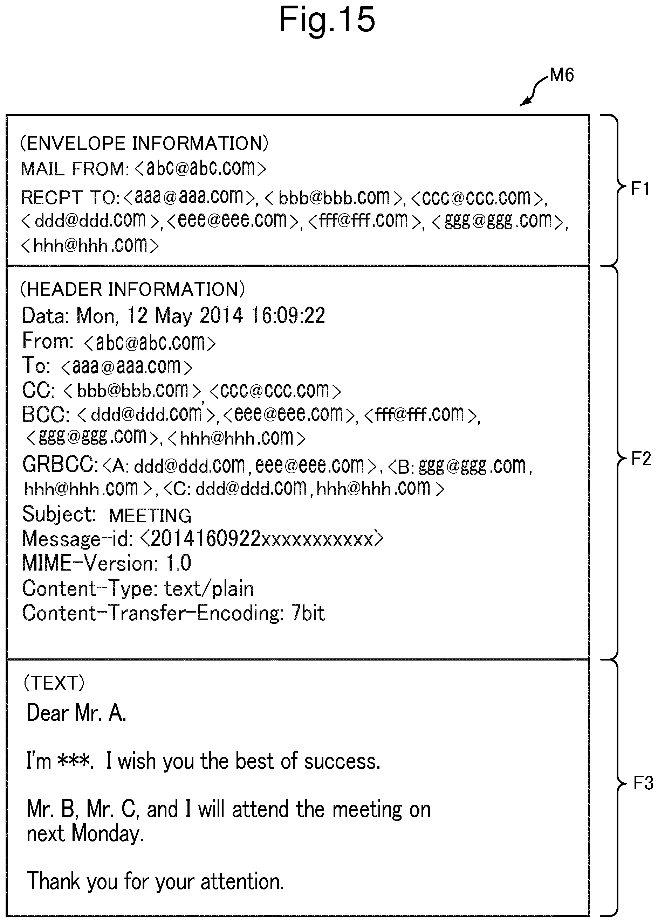

Fig. 15 is a view showing an example of a set of mail data M6 generated by the mail data generating section 53 of the mail client 1 according to the modification of Embodiment 2. This figure shows the contents of the set of mail data M6 generated when the acceptance section 52 accepts the destination addresses and settings shown in Fig. 14. The mail data generating section 53 generates envelope information F1 containing as RECPT TO information all the destination addresses accepted by the acceptance section 52. Furthermore, the mail data generating section 53 generates header information F2 containing GRBCC information which is information that indicates settings of group attributes accepted by the acceptance section 52 and representing groups to which individual BCC addresses belong. In the example shown in Fig. 15, for example, "A: ddd@ddd.com, eee@eee.com" indicates that the BCC addresses "ddd@ddd.com" and "eee@eee.com" belong to Group A.

When the mail server 2A receives the above set of mail data M6 sent from the mail client 1, it analyzes the header information of the received set of mail data M6 to generate sets of mail data each having changed header information. Specifically, the mail server 2A generates, based on the GRBCC information contained in the header information, the sets of mail data M2, M3, and M4 shown in Figs. 7 to 9.

As thus far described, like the mail client 1 according to Embodiment 2 above, the mail client 1 according to the modification of Embodiment 2 can notify, when accepting a plurality of BCC addresses as destinations, the other recipient(s) having a BCC address or addresses set to belong to the same group of the fact that the mail has also been sent to the relevant BCC address.

### <Supplement>

The mail data transmission program (communication control program) described in the above embodiments may be one stored on a computer-readable non-transitory recording medium, such as a hard disk, a CD-ROM, a DVD-ROM or a semiconductor memory. In such a case, a computer-readable non-transitory recording medium with the mail data transmission program recorded thereon is one embodiment of the present invention.

## Claims

1. A communication device comprising:
an acceptance section configured to accept a plurality of destination addresses including at least one BCC address and accept, for each of the destination addresses, a setting of whether or not the destination address is to be notified of the BCC address;
a mail data generating section configured to generate a set of mail data containing information indicating the BCC address for the destination address for which the acceptance section has accepted the setting that the destination address is to be notified of the BCC address and generate a set of mail data containing no information indicating the BCC address for the destination address for which the acceptance section has not accepted the setting that the destination address is to be notified of the BCC address; and
a transmission section configured to send the sets of mail data generated by the mail data generating section.

2. The communication device according to claim 1, wherein the mail data generating section is configured to generate, as the sets of mail data, a set of mail data containing envelope information in which, among the plurality of destination addresses accepted by the acceptance section, a destination address for which the setting that the destination address is to be notified of the BCC address has been accepted is designated as a destination and header information containing the BCC address and a set of mail data containing envelope information in which, among the plurality of destination addresses accepted by the acceptance section, a destination address for which the setting that the destination address is to be notified of the BCC address has not been accepted is designated as a destination and header information not containing the BCC address.

3. The communication device according to claim 2, wherein the mail data generating section is configured to incorporate, into the set of mail data, information allowing a mail server serving as the destination of the set of mail data to be forbidden from deleting the BCC address contained in the header information.

4. The communication device according to claim 1, wherein when accepting a plurality of BCC addresses, the acceptance section accepts, for each of the destination addresses, a setting of whether or not the destination address is to be notified of each of the BCC addresses.

5. The communication device according to claim 1, wherein when accepting a plurality of BCC addresses, the acceptance section accepts, for each recipient's BCC address of the BCC addresses, a setting of whether or not the recipient's BCC address is to be notified of each of the BCC addresses other than the recipient's BCC address.

6. The communication device according to claim 1, wherein
the acceptance section is further configured to accept a setting of a group attribute indicating a group to which the BCC address belongs, and
the mail data generating section is configured to generate, for the BCC address as for which another or other BCC addresses belonging to the same group exist, a set of mail data containing information indicating the other BCC address or addresses belonging to the same group as the BCC address and generate, for the BCC address as for which no other BCC address belonging to the same group exists, a set of mail data containing no information indicating any other BCC address.

7. The communication device according to claim 6, wherein the mail data generating section is configured to generate, as the sets of mail data, a set of mail data containing envelope information in which, among the BCC addresses accepted by the acceptance section, a BCC address as for which another or other BCC addresses belonging to the same group exist is designated as a destination and header information containing the other BCC address or addresses belonging to the same group and a set of mail data containing envelope information in which, among the BCC addresses accepted by the acceptance section, a BCC address as for which no other BCC address belonging to the same group exists is designated as a destination and header information not containing any other BCC address.

8. A mail server comprising:
an outgoing mail creating section configured to, according to a command contained in a set of mail data sent from a communication device, create an outgoing mail having as a destination an address for which a setting that the address is to be notified of a BCC address has been accepted by a receiving section of the communication device, the outgoing mail containing information indicating the BCC address, and create an outgoing mail having as a destination an address for which a setting that the address is to be notified of the BCC address has not been accepted by the acceptance section, the outgoing mail containing no information indicating the BCC address; and
a transmission section configured to send the outgoing mails created by the outgoing mail creating section.
